# EUROPEAN PATENT APPLICATION

(11) **EP 4 844 515 A2**
(43) Date of publication of application: **25.11.2026**
(21) Application number: 26208728.1
(22) Date of filing: 02.06.2022
(51) Int. Cl.: G05D 1/00

(54) **SYSTEM FACILITATING USER ARRANGEMENT OF PATHS FOR USE BY AUTONOMOUS WORK VEHICLE**

(30) Priority: 02.06.2021 US 202163196027 P
(62) Document number(s) of the earlier application(s) in accordance with Art. 76 EPC: 22740579.2 / 4 348 374
(71) Applicant: The Toro Company, Bloomington, MN 55420-1196 (US)
(72) Inventor: BARBOI, Mihnea, Bloomington, 55420-1196 (US); CURD, Derek R., Bloomington, 55420-1196 (US); BARRAS, William T., Bloomington, 55420-1196 (US); SKRTICH, Thomas R., Bloomington, 55420-1196 (US); STURZL, Travis J., Bloomington, 55420-1196 (US)
(74) Representative: J A Kemp LLP

(57) **Abstract**

Stored data structures describe a plurality of paths used to work within a field of a work region. The paths include at least one transition path used to enter or exit the field. The plurality of paths are presented to an operator via a user interface and facilitate arrangement of the plurality of paths into an ordered collection that together defines sequentially executed movements and operations of an autonomous work vehicle within the work region. The ordered collection is stored via a network-accessible data center where it can be user selected. In response to the selection, the ordered collection is downloaded from the data center to the autonomous working vehicle in order to perform the sequentially executed movements and operations within the work region.

## Description

This application claims the benefit of U.S. Provisional Application No. 63/196,027, filed on 2 June 2021, which is incorporated herein by reference in its entirety.

### SUMMARY

The present disclosure is directed to a system facilitating user arrangement of paths for use by autonomous work vehicle. In one embodiment, data structures are stored that describe a plurality of paths defined within a field of a work region. The plurality of paths include at least one transition path used to enter or exit the field. The plurality of paths are presented to an operator via a user interface. The user interface facilitates arrangement of the plurality of paths into an ordered collection that together defines sequentially executed movements and operations of an autonomous work vehicle within the work region. The ordered collection is stored via a network-accessible data center. User selection of the ordered collection is facilitated at the work region via the data center. Downloading the ordered collection from the data center to the autonomous working vehicle is facilitated in order to perform the sequentially executed movements and operations within the work region defined in the ordered collection.

These and other features and aspects of various embodiments may be understood in view of the following detailed discussion and accompanying drawings.

### BRIEF DESCRIPTION OF THE DRAWINGS

The discussion below makes reference to the following figures, wherein the same reference number may be used to identify the similar/same component in multiple figures. The drawings are not necessarily to scale.
FIG. 1 is a diagram of an autonomous work vehicle according to an example embodiment;
FIG. 2 is a diagram of a system according to an example embodiment;
FIG. 3 is a diagram of a work region used by an autonomous work vehicle according to an example embodiment;
FIG. 4 is a diagram illustrating an Autorun example for an autonomous work vehicle according to an example embodiment;
FIG. 5 is a flowchart showing an Autorun process flow for an autonomous work vehicle according to an example embodiment;
FIGS. 6 and 7 are sequence diagrams illustrating Autoload and Autorecord process flows for an autonomous work vehicle according to example embodiments;
FIG. 8 is a diagram of elements of a control panel of an autonomous work vehicle according to an example embodiment;
FIGS. 9 is a sequence diagram illustrating use of manual controls of an autonomous work vehicle according to example embodiments;
FIG. 10 is a diagram illustrating a Follow mode example for an autonomous work vehicle according to an example embodiment;
FIG. 11 is a diagram illustrating a Pause mode example for an autonomous work vehicle according to an example embodiment;
FIG. 12 is a diagram illustrating an ordered collection forming a playlist used with an autonomous work vehicle according to an example embodiment;
FIG. 13 is a diagram illustrating allowable path configurations for a playlist according to an example embodiment; and
FIG. 14 is a flowchart showing use of a playlist according to an example embodiment.

### DETAILED DESCRIPTION

The present disclosure relates to autonomous work vehicles. Generally, an autonomous work vehicle can traverse a work area with a work implement performing a repetitive task. Examples of such tasks include mowing, snow removal, dispersing solids or liquids (e.g., salt, fertilizer, seed, water, herbicides, pesticides), soil treatment (e.g., aeration), cleaning, applying markings or coatings, etc. The autonomous vehicle is self-powered (e.g., internal combustion engine, battery, fuel cell) and self-guiding. The self-guidance of the machine may still involve human inputs, such as first defining the task to be performed and then instructing the machine to perform the task.

While the autonomy of the work vehicle can significantly reduce the need for human labor, the controls should be such that the autonomous device can be easily programmed and commanded by a user without requiring significant technical knowledge or abilities of the end user. For example, the end user may be a former worker who performed the tasks manually in the past, and now is responsible for setting up and running one or more autonomous machines to perform those same tasks. Thus, while the end user may have intimate knowledge of the task to be performed (e.g., the work area, acceptable conditions for work, estimated time to complete the task), the end user should not be assumed to have knowledge of computer systems beyond what is required to operate, for example, a smart phone.

Embodiments described herein relate to a programming and control system used for autonomous work vehicles. These systems may include the autonomous work vehicles themselves, infrastructure such as a control center, and a user device such as a smartphone or portable computer (e.g., laptop, tablet, etc.). The system includes features that allow the end user (also referred to herein as the operator) to easily access and control the autonomous work vehicle via the user device while leaving much of the complexity hidden, e.g., having more complex operations being performed by the control center and/or autonomous work vehicles.

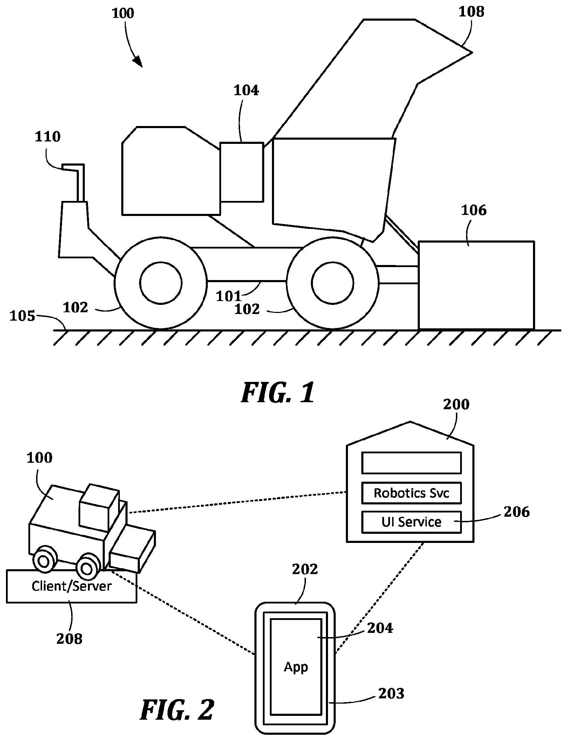

While the systems described herein may be applicable to a number of different autonomous vehicles, a simplified diagram in FIG. 1 illustrates an autonomous work vehicle 100 according to an example embodiment. As shown in this view, the autonomous work vehicle 100 may include a frame or chassis 101 with one or more shrouds that carry and/or enclose various components of the autonomous work vehicle as described below. The autonomous work vehicle 100 includes wheels 102 that provide mobility, although may instead or in addition use other movement and mobility means, such as rollers, tracks, legs, etc.

Some or all of the wheels may be driven by a propulsion system 104 to propel the autonomous work vehicle 100 over a ground surface 105. An implement 106 may be attached to a side or end of the autonomous working vehicle 100 and driven by the propulsion system 104 (e.g., via a power take off system) or by a separate auxiliary drive motor (not shown). The implement 106 may include a mower deck, aerator/dethatcher, snow thrower, snow/dirt brushes, plow blade, dispenser, or any other work-related attachment known in the art. The interface between the autonomous working vehicle 100 and work implement 106 may include a quick release mechanical coupling such that different implements can be readily switched out. Electrical couplings may also be provided on the interface between the autonomous working vehicle 100 and work implement 106.

The autonomous work vehicle 100 includes an electronics stack 108 which includes a plurality of sensors coupled to processing and communications modules. The sensors may include a global positioning system (GPS) receiver that is used estimate a position of the autonomous work vehicle 100 within a work region and provide such information to a controller. The sensors may include encoders that provide wheel rotation/speed information used to estimate autonomous work vehicle position (e.g., based upon an initial start position) within a given work region. The autonomous work vehicle 100 may also include sensors that detect boundary markers, such as wires, beacons, tags, reflectors, etc., which could be used in addition to other navigational techniques described herein.

The autonomous work vehicle 100 may include one or more front obstacle detection sensors and one or more rear obstacle detection sensors, as well as other sensors, such as side obstacle detection sensors (not shown). The obstacle detection sensors may be used to detect an obstacle in the path of the autonomous work vehicle 100 when travelling in a forward or reverse direction, respectively. The autonomous work vehicle 100 may be capable of performing work tasks while moving in either direction.

The sensors used by the autonomous work vehicle 100 may use contact sensing, non-contact sensing, or both types of sensing. For example, both contact and non-contact sensing may be enabled concurrently or only one type of sensing may be used depending on the status of the autonomous work vehicle 100 (e.g., within a zone or travelling between zones). One example of contact sensing includes using a contact bumper that can detect when the autonomous work vehicle 100 has contacted an obstacle. Non-contact sensors may use acoustic or light waves to detect the obstacle, sometimes at a distance from the autonomous work vehicle 100 before contact with the obstacle (e.g., using infrared, radio detection and ranging (radar), light detection and ranging (lidar), sound navigation ranging (sonar), etc.

The autonomous work vehicle 100 may include one or more vision-based sensors to provide localization data, such as position, orientation, or velocity. The vision-based sensors may include one or more cameras that capture or record images for use with a vision system. The vision-based sensors may also include one or more ground penetrating radars that capture or record images, which may be provided to or used by a vision system. The cameras and ground penetrating radars may be described as part of the vision system of the autonomous work vehicle 100 or may be logically grouped in different or separate systems of the autonomous work vehicle, such as an above ground vision system and an underground imaging system. Types of images include, for example, training images and/or operational images.

The one or more cameras may be capable of detecting visible light, non-visible light (e.g., infrared light), or both. Any suitable total field of view (FOV) may be used. In some embodiments, the one or more cameras may establish a total FOV relative to a horizontal plane in the range of 30 to 360 degrees, around the autonomous machine (e.g., autonomous work vehicle 100). The FOV may be defined in a horizontal direction, a vertical direction, or both directions. For example, a total horizontal FOV may be less than or equal to 360 degrees, and a total vertical FOV may be 45 degrees. In some embodiments, the total FOV may be described in a three-dimensional (3D) geometry, such as steradians. The FOV may capture image data above and below the height of the one or more cameras.

In some embodiments, the autonomous working vehicle 100 may include triple-band global navigation satellite systems (GNSS), real-time kinematic positioning (RTK) technology to autonomously drive with centimeter-level accuracy. The GNSS RTK system utilizes reference base stations that provide greater positional precision than satellite positioning alone. These base stations may be provided and maintained by an autonomous vehicle service, or public base stations may be used.

In addition to the above-listed sensors, the electronics stack 108 may include telecommunications equipment for local and long-range wireless communication. For example, the telecommunications equipment may facilitate communicating via cellular data networks (e.g., 4G and 5G data networks), WiFi, Bluetooth, etc. The electronics stack 108 may also include wired interfaces, such as Universal Serial Bus (USB), for local communications and troubleshooting. The controller of the autonomous working vehicle 100 will also include the appropriate protocol stacks for effecting communications over these data interfaces, and also include higher level protocol stacks, such as TCP/IP networking to communicate via the Internet.

The autonomous work vehicle 100 may be guided along a path, for example, manually using a manual controls 110. The manual controls 110 may be used for moving the autonomous working vehicle in regions inappropriate for autonomous operation, such as being moved through occupied public spaces, trailer loading, etc. In some embodiments, manual direction of the autonomous work vehicle 100 may be used during a training mode to learn a work region or a boundary associated with the work region. In some embodiments, the autonomous work vehicle 100 may be large enough that the operator can ride on the vehicle. In such a case, the autonomous working vehicle 100 may include foot stands and/or a seat on which the operator can stand and/or sit.

While the autonomous working vehicle 100 may be operable via on-board controls, there are advantages in controlling the vehicle via devices that are integrated into a large-scale network. In FIG. 2, a block diagram shows system components operable with an autonomous working vehicle 100 according to an example embodiment. A data center 200 includes computer servers that facilitate management, control, and monitoring of the autonomous working vehicles 100. The data center 200 can be used a central repository of vehicle data such as workspaces and work plans. The data center 200 can also gather statistics such as usage statistics (e.g., hours of operations), anomalies (e.g., excessive time needed to complete work, stuck conditions), maintenance and repair (e.g., fault codes). One advantage of a centralized data center 200 is that it can be conveniently used to manage a fleet of autonomous working vehicles 100 and operators of the vehicles. The data center 200 may include or be configured as a robot operation center (ROC) as described herein.

A mobile device 202 is also usable for some management, control, and monitoring operations of the autonomous working vehicle 100. The software 204 operable on the mobile device 202 is targeted for the end-user, and so may have a somewhat limited but simple and intuitive user interface, e.g., using a touchscreen 203. The mobile device 202 may interact directly with the autonomous working vehicle 100, such as via Bluetooth or a WiFi hotspot provided by the autonomous working vehicle 100. The mobile device 202 may also or in the alternate interact with the autonomous working vehicle 100 via the data center 200. Much of the advanced capabilities of the autonomous working vehicle 100 (e.g., detailed path planning) may take advantage of the computational power of the data center 200, although it is possible data center functions as described herein may now or in the future be implemented on the autonomous work vehicle 100. Another reason for using the data center 200 for communications is that it may be easier to ensure robust and secure communications between the data center 200 and autonomous working vehicle 100 than between the mobile device 202 and the autonomous working vehicle 100. In such an arrangement, the data center 200 may act as a relay between the mobile device 202 and the autonomous working vehicle 100, while performing checks on the commands to ensure accuracy, security, etc. In the diagrams that follow, any direct communications shown between a mobile device and an autonomous working vehicle may be alternately intermediated by a data center.

The mobile device 202 is capable of running an application 204 that provides at least user interface functionality to manage various aspects of vehicle operations, as will be described in detail below. Implementation of such an application 204 is well known in the art, and existing applications (e.g., web browsers) may be used that interact with server applications 206, 208 operating on the data center 200 and/or autonomous working vehicle 100.

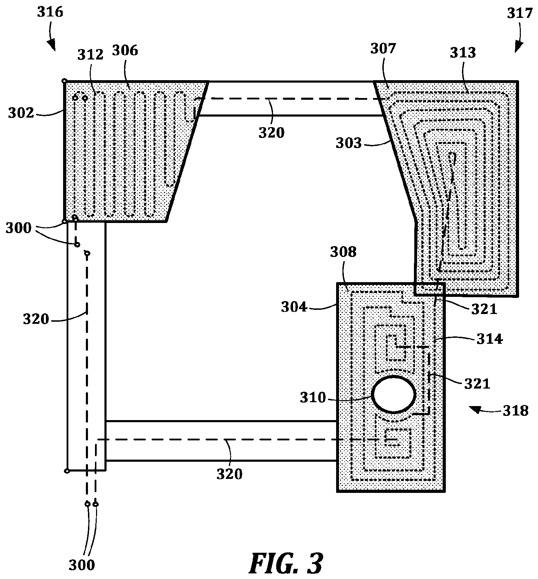

In FIG. 3, a diagram of a work region illustrates some terms and concepts used in embodiments described below. The geometry used by an autonomous work vehicle is defined by points 300, which each may include a triplet of latitude, longitude, altitude, although in some simplified representations, only latitude and longitude may be used. Note that only a small, representative example of points 300 is shown in the figure. The points 300 are used to define paths, which are collections (e.g., lists) of points 300 that may describe an autonomous job and/or some geometry in the world. Note that geometry may be inherently or expressly include more points 300 than are needed to define the geometry. For example, even though a straight line path can be fully defined by a start point and end point, the system may expressly store intermediate points or automatically generate intermediate points (e.g., via linear interpolation) at a certain minimum distance along the path. This can be used by a motion control loop of the work vehicle to ensure a locational deviation from the each point does not exceed some value.

The path geometry includes boundaries 302-304, which are paths that bound work areas 306-308. A path that bounds an area where the autonomous work vehicle is not to traverse while working (e.g., a structure within a field) defines an obstacle 310. Another type of path includes fills 312-314, which are patterns generated within boundaries 302-304 to cover some or all of area within boundaries 302-304 by the work vehicle, while avoiding obstacles 310. The fills 312-314 are drawn with dotted lines in FIG. 3. The fills 312-314 may be generated automatically given some generation parameters, such as the size of the work implement (e.g., cutting head, snow thrower, sweeper), width and turn radius of the autonomous work vehicle, and one of a plurality of different patterns. For example, fills 312, 314 use a back-and-forth pattern while fill 313 uses a concentric (spiral-like) pattern that starts by traversing a first path at or near the boundary 303, and reducing the size of the path by an offset for each traversal. The autonomous work vehicle typically runs fills 312-314 with the work implement turned on, e.g., mower blades rotating, whereas for some other paths inside and outside the work areas, the work implement may be turned off.

Also shown in FIG. 3 are fields 316-318, which include one boundary, zero or more obstacles, and one or more fills. Another type of path is shown as transit paths 320 which are non-working paths (e.g., work implement may be disengaged). The transit paths 320 are indicated using dashed lines. The transit paths can be used to connect one field to another, and thus may start within one field boundary and end within another. The system may also define traversal paths 321, which are paths that avoid obstacles specific to a boundary, fill, and transit path, and. For example, a traversal path may connect the end of a fill to the start of a transit path and the end of a transit path to the start of a fill. The traversal paths 321 can be generated dynamically on the robot, and may also be traversed with the work implement disengaged. Transit paths 320 are (mostly) outside of fields and whereas traversal paths 321 are within fields.

Both the transit paths 320 and traversal paths 321 may be dynamically generated or operator-defined. Note that the paths in FIG. 3 that are traversed by the autonomous work vehicle include fill paths 312-314, transit paths 320 and traversal paths 321, and these paths in this example can connect together to form a single contiguous path that may be traversed within the work region during a work session. Also note that the fill paths 312-313 may begin anywhere within the fields 316-318, and do not necessarily need to have starting and ending points near a border, transit path, etc. The ability to dynamically generate traversal paths 321 provides flexibility in efficiently defining the fill paths 312-314 without concern that start or end of the fills satisfies some constraint.

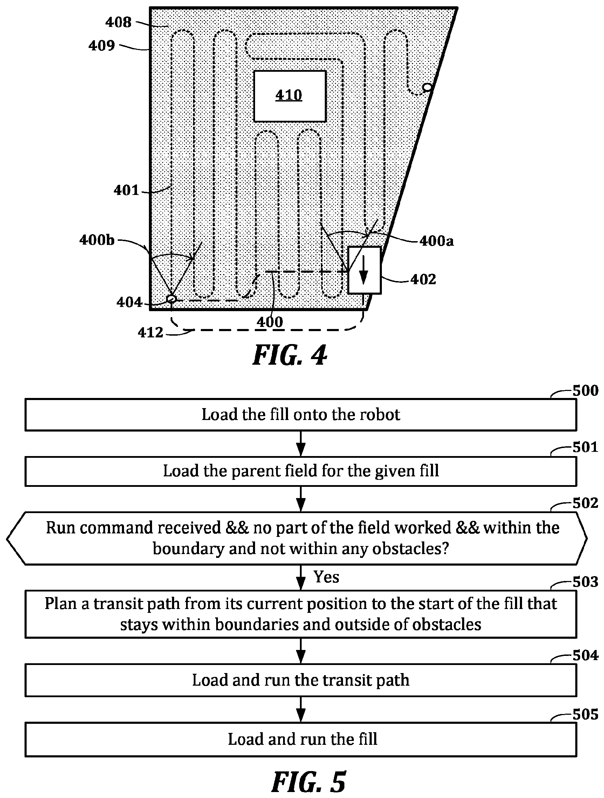

In the next section, a number of operational modes of an autonomous work vehicle according to an example embodiment are described. The first operational mode is termed "Autorun," and aspects of this mode are shown in FIGS. 4-5. As seen in FIG. 4, Autorun will plan and run a path 400, 401 that positions the autonomous work vehicle 402 at the start point 404 of a mowing fill 401, given that the autonomous work vehicle 402 is within a field 408. This feature prevents the operator from having to align the autonomous work vehicle 402 to the start point 404 of a fill 401. The operator need only drive the autonomous work vehicle 402 to an arbitrary point near the boundary of the field 408 in which the fill path 401 has been generated, press "Run," (e.g., either on the autonomous work vehicle 402 or via an application on a mobile device) and the autonomous work vehicle 402 will start its job. Note that the arrow on the autonomous work vehicle 402 indicates a direction of forward motion of the autonomous work vehicle 402. The autonomous work vehicle 402 may also be able to backup and/or rotate in place in some embodiments.

The operations involved in the Autorun mode are shown in the flowchart of FIG. 5. The fill 401 is loaded 500 onto the robot, which in this example refers to the autonomous work vehicle 402. The fill may be loaded automatically (e.g., based on geolocation) and/or through user input. For example there may be different fills for different work implements, different patterns, etc., and so even though robot may be able to automatically determine at least one fill based on geolocation, the user may need to select from a number of available fills.

At operation 501, the robot 402 loads the parent field 408 for the given fill, which identifies boundaries 409 and obstacles 410. At condition block 502, three conditions may be considered: the robot 402 receiving a "run" command, the robot has not worked any part of the field 408; and the robot is within the boundary 409 and not within any obstacles 410. If the condition block 502 returns "true," the robot 402 dynamically plans 503 a traversal path 400 from its current position to a start point 404 of the fill that stays within boundaries 409 and outside of obstacles 410. Note that in some embodiments, the robot 402 may be able to safely move outside the boundary 409, in which case an alternate path 412 may be used. This other path may 412 be considered a combination of a traversal path and a transit path, as part of it is outside the boundary 409.

After the traversal path 400 is planned, the robot 402 loads 504 the traversal path 400 and runs it immediately. In the illustrated example, the robot 402 will perform two ninety degree rotations 400a, 400b, which may be performed in place if the robot 402 is so capable, and can do so without damaging the work surface (e.g., turf). Alternatively, the robot 402 may back up and turn, perform a multi-point turn, etc., in order to make the indicated rotations 400a, 400b. These additional movements can also be included in the traversal path 400. Once the traversal path 400 completes (e.g., an end point of the path is reached), the robot loads and runs 505 the original fill 401. If the robot 402 is interrupted for any reason during the traversal path 400, the original fill is loaded again, and this process may be repeated.

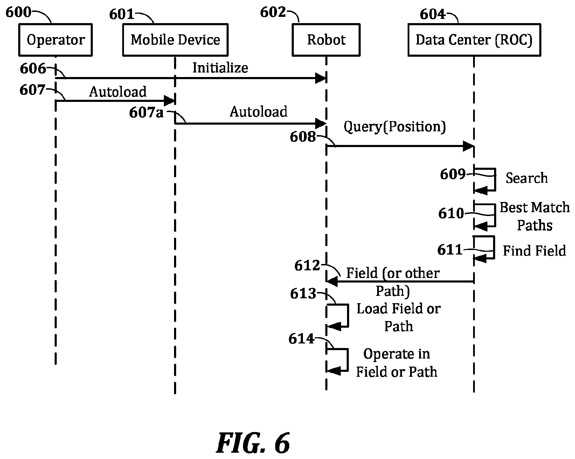

Another operational mode used within a system according to an example embodiment is known as "Autoload." Autoload finds the closest path to the robot and loads it. For example, a mobile application may provide a button "Load Closest" that also displays the path that will be loaded. The display (e.g., on a mobile device application and/or data center web page) updates in real-time as the robot moves through the world. The operations involved in Autoload are shown in FIG. 6. An operator 600 initializes 606 the robot 602 (e.g., autonomous working vehicle), which may involve at least turning on the robot 602, and optionally driving it somewhere, e.g., an arbitrary point proximate the field to be worked. If the operator 600 knows where the targeted path is, it may be assumed that the operator moves/drives the robot 602 to the path or somewhere nearby.

The operator 600 presses 607 the Autoload button on the mobile application, which is running on the mobile device 601. This may also be accomplished by interacting directly with a user interface of the robot 602, e.g., switches, display screen. As shown here, the mobile device 601 communicates the Autoload command 607a directly to the robot 602, however in other embodiments this may be transmitted to a cloud data center (e.g., ROC 604) which then relays the command to the robot 602.

In response to the Autoload command, the robot 602 queries 608 the ROC 604 with its current position. The ROC 604 searches 609 through all paths within some distance (e.g., 1 mile) of the robot 602, and returns 610 the best match. If the nearest paths are fields, the robot's position is checked 611 against these fields to determine if the robot is within any of the boundaries. If it is, this field data 612 is returned, along with other appropriate data such as fill path, boundary data, and obstacle data. If the robot is within multiple fields, the most recently run fill path for the field may be returned with field data 612. If the robot is not within any fields, the closest path is returned with field data 612, e.g., a transit path. The robot loads 613 the returned path and operates 614 there. If a fill path of the field is loaded 613, the robot 602 may start work, whereas if a transit path is loaded 613, the robot 602 may follow the transit path until a field is entered, upon which a field path may then be loaded (not shown) and a traversal path may optionally be generated.

Another operational mode used within a system according to an example embodiment is known as "Autorecord." Autorecord is a system for recording the boundary of a work area, generating a fill to cover that area, and loading that path to the robot in one step. An operator 700 starts Autorecord by pressing 706 a physical button on the robot 702, or optionally pressing 707 a software button in the mobile device 701. The mobile device 701 may communicate the Autorecord command directly to the robot 702 as shown, or a data center 704 (e.g., ROC) may relay the command.

The robot's position 708 is transmitted to the data center 704. The data center 704 uses the robot's position to set 709 metadata fields required for recording, which the metadata 710 then being returned to the robot. The position can reverse geocoded to obtain an address, which is part of the metadata 710 and used to automatically name the resulting path by the data center 704. If the given address has already been used for a path, an incrementing number is added to the end of name of the path.

The closest base station to the robot is chosen 711 for this path, and toggled on to provide GPS RTK corrections to the robot 702. The robot 702 is put into a recording mode 712, and saves the metadata 710 returned by the data center 704. In this example the recording mode 714 after receiving inputs 712, 713 from both the ROC 704 and the operator 700. Note that input 713 could alternately originate from the mobile device 701.

In the recording mode 714, the operator 700 drives the robot 702 around boundaries and obstacles until sufficient location data is recorded to define the field is recorded. The operator 700 sends and instruction 715 to the robot 702 to upload the recorded location data, either directly as shown or via the mobile device 701. The recorded field data 716 is uploaded to the data center 704, along with the robot's current heading. The data center 704 generates a fill path 717 and returns the fill 718 to the robot 702. Note that the fill path may be formed such that a start of the infill lines aligns with the robot's current heading. In other embodiments, the fill path 717 may be use some other start point, and a dynamic traversal path can be generated.

The physical characteristics of the robot 702 (e.g., robot dimensions, turn radius, work implement size, work implement mounting location) used to record the field may also be used as inputs to the algorithm used to generate the fill path 717, as these physical characteristics affect ability of the robot to work along a geometry of the fill path (e.g., safe proximity to boundaries, minimum turn radius, discharge location and required clearance). Different robots may require different parameters due to different turning ability, widths, work implement sizes, etc. The robot 702 loads 719 the newly generated fill, and may then begin work operations 720, e.g., by directly moving and working along the fill path 717 or by first moving along a traversal path before working along the fill path 717.

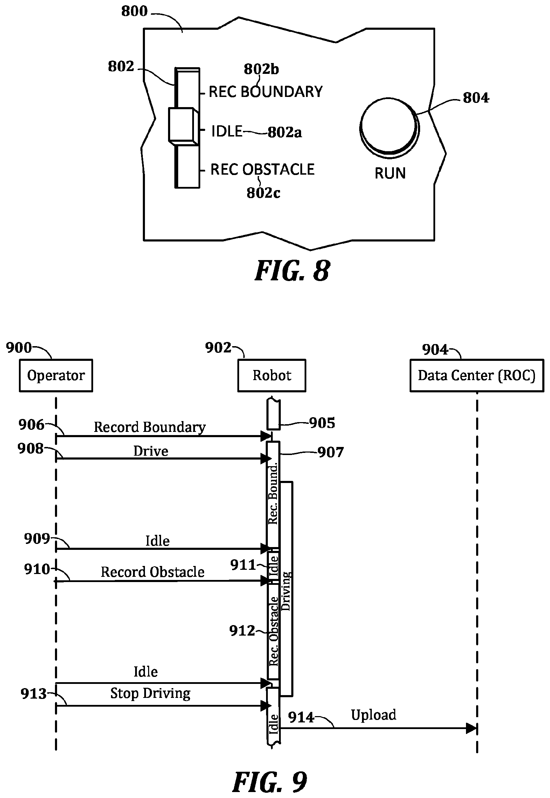

As seen in the diagram of FIG. 8, a control panel 800 of a robot includes a physical interface that enables the three functions outlined above, Autorecord, Autoload, and Autorun. The control panel 800 is shown with a three-position switch 802 and a run button 804. It will be understood that other switch configurations may be used (e.g., slide, toggle or rotary for the three positon switch and/or run switch). The switch 802 is responsible for managing recording state. In the idle position 802a, the robot is in an idle state and does not record. In the recording boundary position802b, the robot records the external boundary of the field. In the recording obstacle position802c, the robot records internal obstacles within the field.

This feature allows an operator to plan and execute an autonomous job without needing to interact with a software interface, or without the operator needing be trained on specific terminology. In one embodiment, they can do so efficiently with only two physical inputs, by moving the recording switch 802 once and pressing the run button 804 once, the driving the robot around the boundary or obstacle. In FIG. 9, a sequence diagram shows an operational flow applicable to a physical control panel as shown in FIG. 8.

At the start, the robot 902 is in an idle state 905 (not recording, no path loaded). The operator 900 sets 906 the recording switch 802 to "Recording Boundary" (or "Recording Obstacle" could be set instead). This setting 906 also implies activating the run button 804 after positioning the recording switch 802. The robot 902 triggers the Autorecord flow, and the robot 902 enters a recording mode 907. The operator 900 provides operator inputs 908 to drive the robot around (e.g., via manual controls 110 as seen in FIG. 1), switching freely between the three recording switch states, as indicated by inputs 909, 910 and recording modes 911, 912. Note that the driving inputs 908 may be repeatedly provided during these modes 907, 911, 912.

As noted above, the state change commands 906, 909, 910 can be achieved by setting the recording state of the three-way recording switch 802 (see FIG. 8) then pressing the run button 804. The position of the recording switch 802 is ignored once the run 804 button is pressed, and pressing the run button 804 again will stop any recording in progress. An indicator may be used to indicate recording is in progress, such as lighting up the button 804 when recording, and/or lighting up the labels 802b,c on or near the recording switch 802.

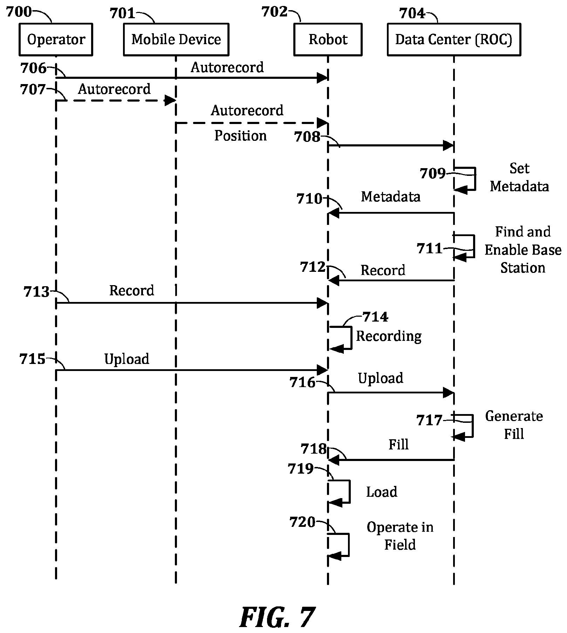

Once the operator 900 has completed mapping out the boundaries and obstacles, the operator stops driving via operator input 913 and the gathered data is uploaded 914 to the ROC 904. Note that a similar uploading may occur after each recording mode 907, 912 is complete, or at one time as shown. The recording modes 907, 912 and uploading 914 may include processes shown in FIG. 7 for the Autorecord process flow. Thereafter, the robot may trigger Autoload flow as shown in FIG. 6 to load the recorded field and any fill paths generated for the field, and then Autorun flow may be performed as shown in FIG. 5 to execute the fill paths.

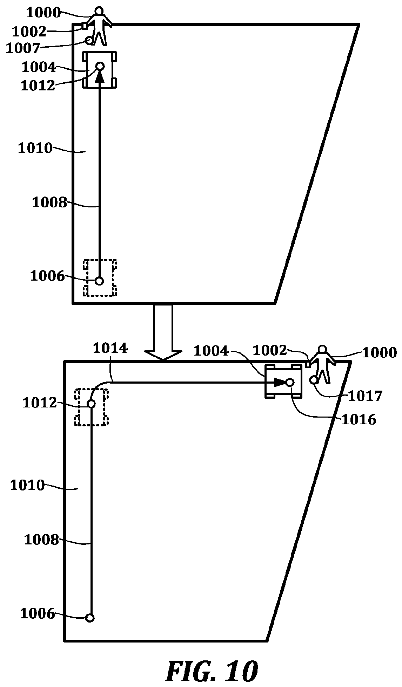

Another operational mode used within a system according to an example embodiment is known as "Follow" mode. In Follow mode, the robot follows an operator as long as the operator is continuously sending a following signal, e.g., continuously pressing a button on the mobile application, for example. In FIG. 10, a simplified diagram illustrates the Follow mode according to an example embodiment. An operator 1000 has a mobile device 1002 with an application loaded on it that initiates the operation, e.g., communicates with a robot 1004 via a ROC (not shown) or other data center. The upper part of FIG. 10 illustrates a first time where the robot 1004 is in the Follow mode in a field 1010, and the lower part of FIG. 10 shows a second time.

To begin, the operator 1000 presses and holds "Follow" (e.g., a "Follow" button on a touchscreen) on a mobile application that executes on the mobile device 1002. The application repeatedly transmits the user location 1007 at a relatively short time period between updates, e.g., every 0.2s. The robot 1004 plans a path 1008 (e.g., a Dubbins path) from its initial location 1006 to the operator's location 1007. The robot 1006 loads the dynamic path 1008 and runs it, stopping at a point 1012 that is a predefined separation distance (e.g., 2m) from the latest reported location 1007 of the operator 1000. This is shown being repeated in the lower part of FIG. 10, where the robot 1004 has moved from the previous point 1012 to a new point 1016 that is offset from the operator's new location 1017. The new path 1014 is added to the previous path 1008 to build a path that bounds the field 1010 and/or an obstacle within the field 1010. The robot 1004 records its vehicle locations during this process. The vehicle locations can later being uploaded to a data center to define the field 1010, as well as generate a fill path for the field 1010.

Note that the operator 1000 may hold the "Follow" button continuously while moving from point to point, or may first move to a waypoint and then hold this button while at rest, e.g., drawing out straight line paths. Generally, if the reported location changes by some distance (e.g., at least 2m) while the "Follow" button is activated, the robot may generate, load, and run a new path to the new location If the user stops pressing the "Follow" button, the robot stops.

If the robot does not receive a location update message for some amount of time (e.g., 1s), it exits Follow mode and stops moving. This may occur if either the mobile device 1002 or the robot 1006 loses connection, a cloud service fails, or some other error occurs (e.g., bad message, application crashes). There may be other triggering events that cause the robot 1006 to exit Follow mode, e.g., positioning error in the mobile device 1002 reports a location that is unreasonably far away (e.g., greater than 200m from the robot's current position) or location changes that represents an unreasonably high velocity of the operator 1000 (e.g., greater than 15 km/hr).

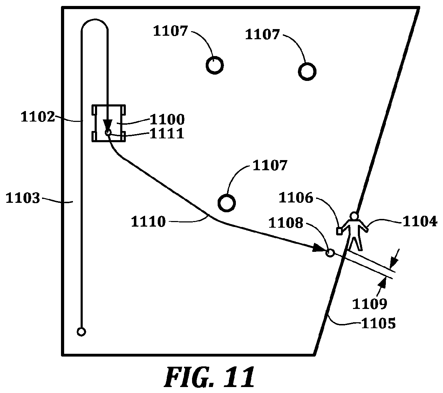

Another operational mode used within a system according to an example embodiment is known as Summon. Summon calls the robot to the edge of a boundary closest to the user. In FIG. 11, a diagram shows an example of the Summon operation. A robot 1100 has a fill 1102 loaded and is currently traversing the fill 1102 in field 1103. An operator 1104 sends the Summon command via a mobile device 1106, which contains the location of the operator 1104. The operator 1104 may be outside the boundary 1105, and also may be inside the boundary 1105 in some embodiments.

The robot 1100 loads the field information, including boundaries 1105 and obstacles 1107. The operator's position is projected to a target point 1108 at or near the boundary 1105, and the robot 1100 plans a traversal path 1110 from current location point 1111 to the target point 1108 which avoids the obstacles 1107. Note that if the operator 1104 is inside the boundary, the point 1108 may be defined as being a safety distance 1109 (e.g., 2m) from the operator 1104. This safety distance 1109 may still be enforced if the operator 1104 is on the boundary 1105 or closer than the safety distance 1109 to the boundary 1105. The robot 1100 loads and runs this traversal path 1110. Once the robot 1100 reaches the point 1108 on the boundary 1105, it stops and turns its engine off. The Summon command allows the operator 1104, for example, to stop the work on the fill 1102 if a dangerous condition is seen, perform maintenance (e.g., refuel), etc. If operator 1104 sends a pause command to the robot 1100 after it has been summoned, the robot 1100 unloads the traversal path 1110 and discards it. The robot 1100 may thereafter continue where it left off on the fill 1102, e.g., location point 1111.

Note that the paths and fill generation described above use the location detection (e.g., GPS) in the autonomous work vehicle and/or mobile device. In other embodiments, the user can create paths using a computer program, e.g., an editor that allows defining the paths overlaid on a map. For example, the operator can use the field editor program to display a map image of the general area to be worked. This can be done through any combination of text queries (e.g., based on street address and/or geolocation coordinates) and manual zooming and panning of the map display. One the target area is displayed, the operator clicks out points on the map that together define the boundary of the field to be mowed. If (internal) obstacles are to be added, they are similarly clicked out at this time. Once the boundary is known to the ROC, the ROC is instructed (by the operator) to generate a fill for the field. The operator may provide additional data before the fill is auto-generated, such as the robot model, type of work implement, type of fill desired (e.g., back-and-forth or circumferential), etc. Typically, this is done using a desktop or laptop computer, although is also possible to implement on a mobile device.

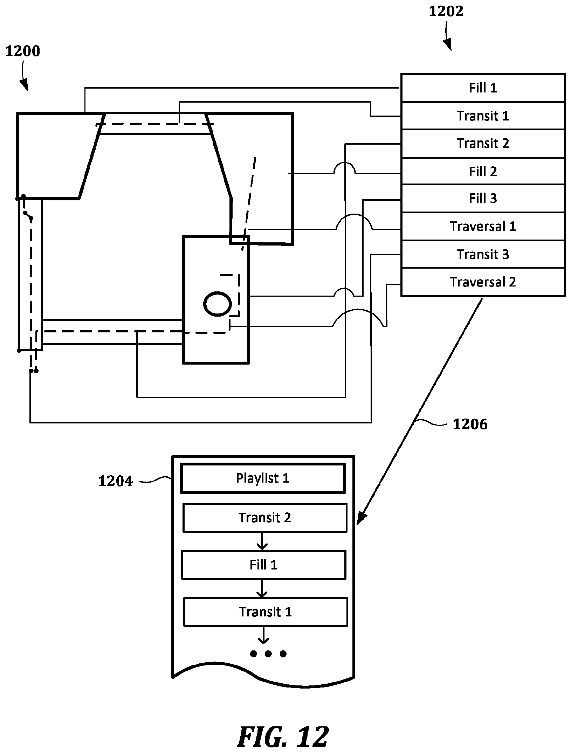

Using the processes described above, an operator can generate numerous paths in a work area. In some embodiments, an operator can use these multiple path descriptions to form a playlist, which is a collection (e.g., ordered list) of paths and fills. Each entry in the playlist is a playlist item, and each item may be looped an arbitrary number of times. For example, an operator may wish the autonomous work vehicle to work an area in which a number of transit paths, fills, and traversals have been previously defined. In FIG. 12, a diagram shows an example of a playlist according to an example embodiment.

In FIG. 12, a work region 1200 is shown, which corresponds to the region shown in FIG. 3. This region may be presented diagrammatically to the operator, e.g., as graphical components (e.g., polylines, closed shapes) fills overlaid on a map (e.g., aerial or satellite photograph map, graphical map). For clarity, the fields are shown without fills, and it is assumed that each field represents one or more fills. The operator has previously created data structures 1202 that correspond to the paths and fills in the work region 1200, as well having created data structures (not shown) for other objects such as boundaries and obstacles. These data structures 1202 are shown in an arbitrary order, and each can be inspected by the operator in a playlist application by selecting a graphic on the map or a list of named graphical object.

Note that the illustrate data structures 1202 include traversal paths, which assumes that the user can manually create traversals and/or dynamically created traversals can be saved. In other embodiments, traversal paths may be purely dynamic, e.g., created during each work session for just that session, in which case traversals may not be stored within the data structures 1202 or visible on a representation of the work region 1200. When forming playlists as described below, the system may still be able to determine an allowable sequence, e.g., moving between adjacent or overlapping fields, even if the traversal paths are not explicitly listed or displayed.

After two or more fills have been created as described above, the operator can create a new playlist, e.g., via interacting with the data center (e.g., ROC) using a client program, such as a mobile application, web browser, etc. The user creates and names a new playlist, shown as ordered collection 1204, and then adds items to the ordered collection 1204, as indicated by arrow 1206. If the item to be added is a field, the user will also select a fill, as fills may be specific to particular robots and work implements.

The assembly of data structures 1202 into an ordered collection 1204 playlist may confirm certain rules to ensure the resulting sequence is achievable. For example, if the item last added was a path p1, and the next item to be added is a path p2, then new path p1 should be in contact with the previous path p2 such that the robot can unambiguously transition from p1 to p2. Note that this contact may not require that the paths p1 and p2 share a point. In some cases, of the end of p1 is offset from the beginning of p2 by some reasonably small amount threshold distance (e.g., 1% of path length, 1 meter, etc.), in which case the system may be able to use the paths p1 and p2 adjacently in a playlist.

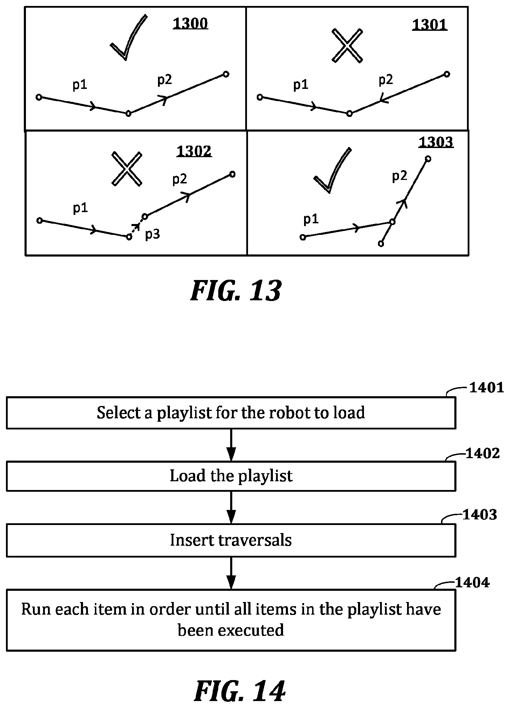

In FIG. 13, a diagram illustrates examples of adjacent paths that may or may not be co-adjacent in a playlist according to an example embodiment. The examples in FIG. 13 assume a path includes an ordered set of points from start to end, as indicated by the arrows on the different paths. Thus, while the paths in block 1300 and block 1301 have the same geometry, the paths in block 1301 cannot be used together because they are in opposing directions, and so the vehicle cannot transition from the end of p1 to the beginning of p2, at least not within some reasonable offset. The paths in block 1302 are too far separated to be used adjacently, although it may be possible to unambiguously construct a connecting path p3, assuming there are no obstacles between the end of p1 and the beginning of p2. The paths in block 1303 do share a point, so even if the last point of p1 is not close to the start point of p2, it may be allowable to enter path p2 this way, e.g., if the heading of the two paths p1, p3 is within some limit, e.g., ±30°.

Another rule that may be considered for forming a playlist is where the last item added is a path p1, and the next item to be added is a field f1. In such a case, the end point of path p1 should be somewhere on or within the boundary of the field f1, although this can be relaxed as described above to account for reasonably small gaps between the path end point and the field boundary. There is a converse of this rule where the last item added is a field f1 and the next item to be added is a path p1. The only difference in this rule is that the start point of p1, not the end point, should be within, on or reasonably close to the boundary of f1. In the case where the last item added is a field f1, and the next item to be added is a field f2, then the boundaries of both items should intersect, overlap, and/or be reasonably close as defined above.

In FIG. 14, a flowchart shows a procedure used to work a region using a predefined playlist according to an example embodiment. The operator (e.g., using an application on a mobile device) selects 1401 a playlist for the robot to load. The robot loads 1402 the playlist by downloading information about all items, which may be formatted as an ordered collection (e.g., array, linked list, graph, etc.). The information in the ordered collection includes the order of execution and path information for every item. Both boundary and fill information are also loaded 1401 for each field item.

Traversals may be inserted 1403 between each fill-to-path or path-to-fill transition. For item transitions that are fill-to-path, the robot may dynamically plan a traversal that connects the end point of a fill to the start point of the transition path. For item transitions that are path-to-fill, the robot may dynamically plan a traversal that connects the end point of the transition path to the start point of the fill. Each traversal is formed based on the start pose, end pose, boundary, and obstacles. The robot runs 1404 each item in order until all items in the playlist have been executed.

While the present disclosure is not so limited, an appreciation of various aspects of the disclosure will be gained through a discussion of illustrative embodiments provided below.

Embodiment 1 is method comprising: storing data structures that describe a plurality of paths defined within a work region, the plurality of paths include at least one transition path used to enter or exit the field and may include a fill path; presenting the plurality of paths to an operator via a user interface and facilitating arrangement of the plurality of paths into an ordered collection that together defines sequentially executed movements and operations of an autonomous work vehicle within the work region; storing the ordered collection via a network-accessible data center; facilitating user selection of the ordered collection at the work region via the data center; and facilitating downloading the ordered collection from the data center to the autonomous working vehicle in order to perform the sequentially executed movements and operations within the work region defined in the ordered collection.

Embodiment 2 includes the method of embodiment 1, further comprising: facilitating user definition of a boundary of the field; and auto-generating a fill path at the data center such that the fill path covers an area within the boundary. Embodiment 3 includes the method of embodiment 2, further comprising facilitating user definition of one or more obstacles within the field, wherein the auto-generating of the fill path further involves avoiding the obstacles within the field.

Embodiment 4 includes the method of embodiment 3, wherein the boundary of the field and the one or more obstacles within the field are generated by an operator driving the autonomous working vehicle along paths that define the boundary and the obstacles, the autonomous working vehicle recording locations of the paths and sending the locations to the data center. Embodiment 5 includes the method of embodiment 3, wherein the boundary of the field and the one or more obstacles within the field are generated by a mobile device of the operator sending locations to the data center and the autonomous working vehicle moving to the locations within a separation distance, the locations being sent to the data center to define the boundary and obstacles. Embodiment 6 includes the method of embodiment 3, wherein the boundary of the field and the one or more obstacles within the field are generated by an operator clicking on a computer generated map of the work region to create paths that define the boundary and the obstacles.

Another embodiment includes the method of embodiment 2, further comprising: positioning the autonomous work vehicle at an arbitrary point near the boundary of the field; receiving a signal from the operator to run the autonomous work vehicle after positioning at the arbitrary point; downloading the fill path and boundary data to the autonomous work vehicle from the data center; dynamically generating and loading a traversal path from the arbitrary point to a start point of the fill path; and moving the autonomous work vehicle along the traversal path to the start point of the fill path and performing work along the fill path

Embodiment 8 includes the method of embodiments 1-7, wherein the transition path is used to exit the field, and wherein facilitating the arrangement of the plurality of paths into the ordered collection further comprises confirming that a start point of the transition path is at least one of: within a boundary of the field; on the boundary of the field; and within a threshold distance of the boundary of the field. Embodiment 9 includes the method of embodiment 8, wherein an end point of the fill is distant from the start point of the transition path, the method further comprising auto-generating a traversal path within the field between the end point of the field and the start point of the transition path.

Embodiment 10 includes the method of embodiments 1-7, wherein the transition path is used to enter the field, and wherein facilitating the arrangement of the plurality of paths into the ordered collection further comprises confirming that an end point of the transition path is at least one of: within a boundary of the field; on the boundary of the field; and within a threshold distance of the boundary of the field. Embodiment 11 includes the method of embodiment 10, wherein a start point of the fill is distant from the end point of the transition path, the method further comprising auto-generating a traversal path within the field between the start point of the field and the end point of the transition path.

Embodiment 12 includes the method of any of embodiments 1-11, further comprising, while the autonomous working vehicle is performing the sequentially executed movements on one of the plurality of paths within the work region: receiving a summon signal from a mobile device of an operator; determining a location of the operator near a boundary of the field; determining a traversal path from a current location of the autonomous working vehicle and the location of the operator; stopping the sequentially executed movements and moving the autonomous working vehicle along the traversal path; and stopping the autonomous working vehicle on the traversal path at a predefined safety distance from the location of the operator. Embodiment 12A is a data center coupled to a wide area network and comprising one or more computers configured to perform the method of any one of embodiments 1-12.

Embodiment 13 includes the method of any one of embodiments 1-12, further comprising: positioning the autonomous work vehicle within the field; receiving a first signal from a mobile device of the operator to record a geometry of the field, the geometry comprising at least one of a boundary of the field and an obstacle within the field; determining locations of the mobile device as the operator moves along the geometry; autonomously moving the autonomous work vehicle along the locations of the mobile device, wherein the autonomous work vehicle records vehicle locations while moving and stops moving based on detecting the autonomous work vehicle is within a predefined separation distance of a latest location of the mobile device; receiving a second signal from an operator to stop recording the geometry; uploading the vehicle locations to the data center; generating a fill path for the field based on the vehicle locations; and storing the fill path in the data structures, the plurality of paths comprising the fill path. Embodiment 14 includes the method of embodiment of claim 13, wherein for each of the locations of the mobile device, the autonomous vehicle plans a Dubbins path from a current vehicle location to the location of the mobile device.

Embodiment 15 is a method comprising: positioning an autonomous work vehicle at an arbitrary point near boundary of a field, wherein a fill path that covers an area within the boundary and avoids obstacles within the boundary has been previously generated for the field and stored at a network-accessible data center, and wherein boundary data and obstacle data were also previously generated and stored on the data center; receiving a signal from an operator to run the autonomous work vehicle after positioning at the arbitrary point; downloading the fill path, the boundary data, and the obstacle data to the autonomous work vehicle from the data center; dynamically generating and loading a traversal path from the arbitrary point to a start point of the fill path; and moving the autonomous work vehicle along the traversal path to the start point of the fill path and performing work along the fill path.

Embodiment 16 includes the method of embodiment 15, wherein dynamically generating the traversal path comprises forming the traversal path to stay within the boundaries and outside the obstacles. Embodiment 17 includes the method of embodiment 15, wherein multiple fill paths for the field are generated for the field and stored at a network-accessible data center, each of the multiple fill paths corresponding to different work implements of the autonomous work vehicle, the method further comprising receiving a user input to select the fill path from the multiple fill paths.

Embodiment 18 includes the method of embodiment 15, further comprising, while the autonomous working vehicle is performing the work along the fill path: receiving a summon signal from a mobile device of the operator; determining a location of the operator near the boundary of the field; determining a second traversal path from a current location of the autonomous working vehicle and the location of the operator; stopping the work and moving the autonomous working vehicle along the second traversal path; and stopping the autonomous working vehicle on the second traversal path at a predefined safety distance from the location of the operator. Embodiment 19 includes a computer-readable medium storing instructions operable to cause the autonomous working vehicle to perform the method of any one of embodiments 15-18.

Embodiment 20 is a method comprising: initializing an autonomous work vehicle that is positioned at an arbitrary point proximate a field, wherein a fill path that covers an area within a boundary of the field and avoids obstacles within the field was been previously generated for the field and stored at a network-accessible data center; receiving a signal from an operator to run the autonomous work vehicle after positioning at the arbitrary point; determining a location of the autonomous work vehicle and sending a query to the data center with the location; receiving the fill path for the field from the data center, wherein the fill path is a best match for the location; and moving the autonomous work vehicle to perform work in the field along the fill path.

Embodiment 21 includes the method of embodiment 20, wherein the autonomous work vehicle is located outside the field, and the method further comprising receiving a transit path from the data center, and moving the autonomous work vehicle along the transit path before performing the work along the fill path. Embodiment 22 includes the method of embodiment 20, wherein multiple fields satisfy the query, and wherein a best match comprises a most recently run fill for the field. Embodiment 23 includes a computer-readable medium that stores instructions operable to cause the autonomous working vehicle to perform the method of any one of embodiments 20-22.

Embodiment 24 is a method comprising: positioning an autonomous work vehicle within a field; receiving a first signal from an operator to record a boundary of the field; receiving first operator inputs to drive the autonomous work vehicle along the boundary and sending boundary locations of the boundary to a network-accessible data center; receiving a second signal from an operator to stop recording the boundary, the boundary locations being associated with the field at the data center; receiving a third signal from an operator to record an obstacle of the field; receiving second operator inputs to drive the autonomous work vehicle around the obstacle and sending obstacle locations of the obstacle to the data center; receiving a fourth signal from an operator to stop recording the obstacle, the obstacle locations being associated with the field at the data center; generating a fill path for the field at the data center based on the boundary locations and obstacle locations; and loading the fill path into the autonomous work vehicle and performing work in the field along the fill path by the autonomous work vehicle.

Embodiment 25 includes the method of embodiment 24, wherein the fill path is generated with infill lines that align with a heading of the autonomous work vehicle after the autonomous work vehicle completes recording the boundary and obstacle. Embodiment 26 includes the method of embodiment 24, further comprising sending parameters of the autonomous work vehicle to the data center, the parameters defining physical characteristics of the autonomous work vehicle that affect its ability to work along a geometry of the fill path, wherein the fill path is generated further based on the parameters. Embodiment 27 includes a computer-readable medium that stores instructions operable to cause the autonomous working vehicle to perform the method of any one of embodiments 24-26.

Embodiment 28 includes a method comprising: positioning an autonomous work vehicle within a field; receiving a first signal from a mobile device of an operator to record a geometry of the field, the geometry comprising at least one of boundary of the field and an obstacle within the field; determining locations of the mobile device as the operator moves along the geometry; autonomously moving the autonomous work vehicle along the locations of the mobile device, wherein the autonomous work vehicle records vehicle locations while moving and stops moving based on detecting the autonomous work vehicle is within a predefined separation distance of a latest location of the mobile device; receiving a second signal from an operator to stop recording the geometry; uploading the vehicle locations to a network-connected data center; generating a fill path for the field at the data center based on the vehicle locations; and loading the fill path into the autonomous work vehicle and performing work in the field along the fill path by the autonomous work vehicle.

Embodiment 29 includes the method of embodiment 28, wherein for each of the locations of the mobile device, the autonomous vehicle plans a Dubbins path from a current vehicle location to the location of the mobile device. Embodiment 30 includes a computer-readable medium that stores instructions operable to cause the autonomous working vehicle to perform the method of any one of embodiments 28-29.

It is noted that the terms "have," "include," "comprises," and variations thereof, do not have a limiting meaning, and are used in their open-ended sense to generally mean "including, but not limited to," where the terms appear in the accompanying description and claims. Further, "a," "an," "the," "at least one," and "one or more" are used interchangeably herein. Moreover, relative terms such as "left," "right," "front," "fore," "forward," "rear," "aft," "rearward," "top," "bottom," "side," "upper," "lower," "above," "below," "horizontal," "vertical," and the like may be used herein and, if so, are from the perspective shown in the particular figure, or while the machine is in an operating configuration. These terms are used only to simplify the description, however, and not to limit the interpretation of any embodiment described. As used herein, the terms "determine" and "estimate" may be used interchangeably depending on the particular context of their use, for example, to determine or estimate a position or pose of a vehicle, boundary, obstacle, etc.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g. 1 to 5 includes 1, 1.5, 2, 2.75, 3, 3.80, 4, and 5) and any range within that range.

The various embodiments described above may be implemented using circuitry, firmware, and/or software modules that interact to provide particular results. One of skill in the arts can readily implement such described functionality, either at a modular level or as a whole, using knowledge generally known in the art. For example, the flowcharts and control diagrams illustrated herein may be used to create computer-readable instructions/code for execution by a processor. Such instructions may be stored on a non-transitory computer-readable medium and transferred to the processor for execution as is known in the art. The structures and procedures shown above are only a representative example of embodiments that can be used to provide the functions described hereinabove.

The foregoing description of the example embodiments has been presented for the purposes of illustration and description. It is not intended to be exhaustive or to limit the embodiments to the precise form disclosed. Many modifications and variations are possible in light of the above teaching. Any or all features of the disclosed embodiments can be applied individually or in any combination are not meant to be limiting, but purely illustrative. It is intended that the scope of the invention be limited not with this detailed description, but rather determined by the claims appended hereto.
The following are the claims of the parent application as filed and are included as part of the description of the present divisional application.
1. A method, comprising:
   storing data structures that describe a plurality of paths defined within a field of a work region, the plurality of paths including at least one transition path used to enter or exit the field;
   presenting the plurality of paths to an operator via a user interface and facilitating arrangement of the plurality of paths into an ordered collection that together defines sequentially executed movements and operations of an autonomous work vehicle within the work region;
   storing the ordered collection via a network-accessible data center;
   facilitating user selection of the ordered collection at the work region via the data center; and
   facilitating downloading the ordered collection from the data center to the autonomous working vehicle in order to perform the sequentially executed movements and operations within the work region defined in the ordered collection.
2. The method of claim 1, further comprising:
   facilitating user definition of boundary data that defines a boundary of the field; and
   auto-generating a fill path at the data center such that the fill path covers an area within the boundary.
3. The method of claim 2, further comprising facilitating user definition of obstacle data describing one or more obstacles within the field, wherein the auto-generating of the fill path further involves avoiding the obstacles within the field.
4. The method of claim 3, wherein the boundary data and the obstacle data are generated by an operator driving the autonomous working vehicle along paths that define the boundary and the obstacles, the autonomous working vehicle recording locations of the paths and sending the locations to the data center.
5. The method of claim 3, wherein the boundary data and the obstacle data are generated by a mobile device of the operator sending locations to the data center and the autonomous working vehicle moving to the locations within a separation distance, the locations being sent to the data center to define the boundary and obstacles.
6. The method of claim 3, wherein the boundary data and the obstacle data within the field are generated by an operator clicking on a computer generated map of the work region to create paths that define the boundary and the obstacles.
7. The method of claim 2, further comprising
   positioning the autonomous work vehicle at an arbitrary point near the boundary of the field;
   receiving a signal from the operator to run the autonomous work vehicle after positioning at the arbitrary point;
   downloading the fill path and the boundary data to the autonomous work vehicle from the data center;
   dynamically generating and loading a traversal path from the arbitrary point to a start point of the fill path; and
   moving the autonomous work vehicle along the traversal path to the start point of the fill path and performing work along the fill path.
8. The method of any one of claims 2-7, wherein the transition path is used to exit the field, and wherein facilitating the arrangement of the plurality of paths into the ordered collection further comprises confirming that a start point of the transition path is at least one of: within a boundary of the field; on the boundary of the field; and within a threshold distance of the boundary of the field.
9. The method of claim 8, wherein an end point of the fill path is distant from the start point of the transition path, the method further comprising auto-generating a traversal path within the field between the end point of the fill and the start point of the transition path.
10. The method of any one of claims 1-9, further comprising, while the autonomous working vehicle is performing the sequentially executed movements on one of the plurality of paths within the work region:
   receiving a summon signal from a mobile device of an operator;
   determining a location of the operator near a boundary of the field;
   determining a traversal path from a current location of the autonomous working vehicle and the location of the operator;
   stopping the sequentially executed movements and moving the autonomous working vehicle along the traversal path; and
   stopping the autonomous working vehicle on the traversal path at a predefined safety distance from the location of the operator.
11. The method of any one of claims 1-10, further comprising:
   positioning the autonomous work vehicle within the field;
   receiving a first signal from a mobile device of the operator to record a geometry of the field, the geometry comprising at least one of a boundary of the field and an obstacle within the field;
   determining locations of the mobile device as the operator moves along the geometry;
   autonomously moving the autonomous work vehicle along the locations of the mobile device, wherein the autonomous work vehicle records vehicle locations while moving and stops moving based on detecting the autonomous work vehicle is within a predefined separation distance of a latest location of the mobile device;
   receiving a second signal from an operator to stop recording the geometry;
   uploading the vehicle locations to the data center;
   generating a fill path for the field based on the vehicle locations; and
   storing the fill path in the data structures, the plurality of paths comprising the fill path.
12. The method of claim 11, wherein for each of the locations of the mobile device, the autonomous vehicle plans a Dubbins path from a current vehicle location to the location of the mobile device.
13. A data center coupled to a wide area network and comprising one or more computers configured to perform the method of any one of claims 1-12.
14. A computer-readable medium storing instructions operable to cause the autonomous working vehicle of any one of claims 1-12 to perform the method of any one of claims 1-12.

## Claims

1. A method of operating an autonomous work vehicle, the method comprising, while the autonomous work vehicle is traversing a fill path in a field:
receiving a summon command from a mobile device of an operator, the summon command containing a location of the operator;
projecting the location of the operator to a target point on a boundary of the field;
planning a traversal path from a current location of the autonomous work vehicle to the target point; and
loading the traversal path and moving the autonomous work vehicle along the traversal path.

2. The method of claim 1, further comprising loading field information comprising the boundary and one or more obstacles within the field.

3. The method of claim 2, wherein the traversal path avoids the one or more obstacles.

4. The method of any preceding claim, wherein the target point is on the boundary at a location closest to the operator.

5. The method of any preceding claim, wherein the operator is outside the boundary of the field.

6. The method of any one of claims 1 to 4, wherein the operator is inside the boundary of the field.

7. The method of claim 6, wherein the target point is defined as being a predefined safety distance from the location of the operator.

8. The method of any one of claims 1 to 4, wherein the operator is on the boundary or is closer than a predefined safety distance to the boundary, and wherein the predefined safety distance between the target point and the location of the operator is enforced.

9. The method of any preceding claim, further comprising stopping the autonomous work vehicle when the autonomous work vehicle reaches the target point.

10. The method of claim 9, further comprising turning off an engine of the autonomous work vehicle when the autonomous work vehicle reaches the target point.

11. The method of any preceding claim, wherein the autonomous work vehicle is performing work while traversing the fill path, the method further comprising:
stopping the work before moving the autonomous work vehicle along the traversal path; and
stopping the autonomous work vehicle on the traversal path at a predefined safety distance from the location of the operator.

12. The method of any preceding claim, further comprising, after the autonomous work vehicle has been summoned:
receiving a pause command; and
in response to the pause command, unloading and discarding the traversal path.

13. The method of claim 12, further comprising thereafter continuing traversal of the fill path from a location at which traversal of the fill path was stopped.

14. An autonomous work vehicle comprising a controller, wherein the controller is configured to cause the autonomous work vehicle to perform the method of any one of claims 1 to 13.

15. A non-transitory computer-readable medium storing instructions which, when executed by a processor, cause an autonomous work vehicle to perform the method of any one of claims 1 to 13.
